# EUROPÄISCHE PATENTSCHRIFT

(11) **EP 1 055 858 B1**
(45) Veröffentlichungstag und Bekanntmachung des Hinweises auf die Patenterteilung: **07.01.2004**
(21) Anmeldenummer: 00105933.6
(22) Anmeldetag: 23.03.2000
(51) Int. Cl.: F16L 21/00, F16L 21/08, F16L 37/092

(54) **Muffenverbindung und Klemmvorrichtung für eine Muffenverbindung**
Socket joint and clamp assembly for a socket joint
Raccord de tuyaux à manchon et dispositif de serrage pour un raccord de tuyaux à manchon

(30) Priorität: 18.05.1999 DE 19922729
(43) Veröffentlichungstag der Anmeldung: 29.11.2000
(73) Patentinhaber: Tiroler Röhren- und Metallwerke Aktiengesellschaft, A-6060 Hall (AT)
(72) Erfinder: Mutschlechner, Hermann, 6063 Rum (AT); Maurer, Reinhold, 6020 Innsbruck (AT); Zwirner, Klaus, 6068 Mils (AT); Berktold, Sieghart, 6082 Ellbögen (AT)
(74) Vertreter: Lindner, Michael, Dipl.-Ing.

(56) Entgegenhaltungen:
- AT-B- 372 769
- US-A- 4 867 488

## Beschreibung

Die Erfindung betrifft eine Muffenverbindung zur Verbindung zweier Rohre, Rohrformstücke oder dergleichen, mit einem dem einen Rohr zugeordneten Muffenende, in das ein Spitzende des anderen Rohrs einführbar ist und das einen radial nach innen ragenden Rand mit zumindest zwei ringsegmentförmigen Ausnehmungen aufweist, und einer Klemmvorrichtung zum Halten des Spitzendes in dem Muffenende, indem die Klemmvorrichtung mit dem Spitzende verbunden wird und sich die Klemmvorrichtung an dem Rand abstützt, wobei die Klemmvorrichtung zwei ringsegmentförmige Klemmelemente aufweist, die an ihren Längsenden jeweils ein sich axial erstreckendes Flanschelement umfassen. Die Erfindung betrifft ferner eine Klemmvorrichtung für eine zwei Rohre verbindende Muffenverbindung, wobei die Klemmvorrichtung an einem Rohr festgeklemmt wird und sich diese an einem radial nach innen ragenden Rand eines Muffenendes abstützt, um eine Zugsicherung zu erzielen, mit zwei ringsegmentförmigen Klemmelementen, die an ihren Längsenden jeweils ein sich in axialer Richtung erstreckendes Flanschelement umfassen.

Muffenverbindungen der vorgenannten Art sind bspw. aus AT 372 769 PS bekannt. Sie werden zur Verbindung von gummigedichteten Rohren, beispielsweise Druckrohren gerade dort verwendet, wo eine gute Dichtfunktion auch bei starken Verkehrserschütterungen und Bodenbewegungen gefordert wird. Zur Zugsicherung weisen diese bekannten Muffenverbindungen Klemmvorrichtungen (sogenannte Klemmringe) auf, die verhindern, daß das Spitzende des einen Rohrs aus dem Muffenende des anderen Rohrs bspw. durch Erschütterungen oder den herrschenden Innendruck herausgedrückt werden kann.

Diese Klemmvorrichtung umfaßt zwei aus Metall gefertigte ringsegmentförmige Klemmelemente, die an ihren Längsenden jeweils ein sich in axialer Richtung erstreckendes Flanschelement aufweisen. Im Endabschnitt dieser Flanschelemente ist jeweils eine Bohrung zur Aufnahme einer Klemmschraube vorgesehen. An der radial innen liegenden Fläche der Klemmelemente sind Ringrippen mit einem sägezahnförmigen Profil vorgesehen, die mit der Rohroberfläche des Spitzendes zusammenwirken.

Zur Erzielung einer Muffenverbindung werden die beiden Klemmelemente zunächst über Klemmschrauben lose miteinander verbunden, so daß die beiden Klemmelemente einen an zwei Seiten geöffneten Kreis bilden. Die beiden so miteinander verbundenen Klemmelemente werden in das Muffenende eingelegt und etwas auseinandergezogen, so daß sie hinter dem Rand des Muffenendes liegen. Anschließend wird das Spitzende in das Muffenende eingeführt, wobei sich die beiden Klemmelemente an der Rohroberfläche abstützen. Wenn das Spitzende seine gewünschte Position erreicht hat, werden die beiden Klemmschrauben angezogen, so daß die beiden Klemmelemente zusammengedrückt werden. Dabei graben sich die Ringrippen in die Rohroberfläche ein und sorgen damit dafür, daß die beiden Klemmelemente unverschiebbar mit dem Spitzende verbunden werden. Die Zugsicherung wird durch die beiden Klemmelemente erzielt, die sich an der nach innen ragenden Fläche des Randes abstützen und ein Herausziehen des Spitzendes über diesen Punkt hinaus nicht erlauben.

Obgleich sich diese Klemmvorrichtungen in der Praxis bewährt haben, besteht weiterhin das Bedürfnis, eine Erleichterung bei der Montage und eine Erhöhung der Funktionsfähigkeit bzw. der Zuverlässigkeit zu erzielen.

Vor diesem Hintergrund ist es Aufgabe der vorliegenden Erfindung, die Muffenverbindung der eingangs genannten Art so weiterzubilden, daß die Klemmelemente leicht zu montieren sind und eine verbesserte Funktionsfähigkeit unabhängig von möglichen Fertigungstoleranzen besitzen.

Die der Erfindung zugrunde liegende Aufgabe wird durch die Muffenverbindung der eingangs genannten Art dadurch gelöst, daß jedes Flanschelement an seinem dem Klemmelement abgewandten Ende einen sich in Umfangsrichtung erstreckenden Vorsprung aufweist, der mit einem gegenüberliegenden Vorsprung des anderen Klemmelements zusammenwirkt.

Dieser Vorsprung dient quasi als Auflager und verhindert ein Verkippen des Klemmelements dadurch, daß es mit dem gegenüberliegenden Vorsprung des anderen Klemmelements zusammenwirkt. Damit läßt sich mit konstruktiv einfachen Mitteln erreichen, daß die beiden Klemmelemente getrennt voneinander in das Muffenende eingelegt und anschließend verschraubt werden können, ohne Befürchten zu müssen, daß die Klemmelemente nicht mit ihrer gesamten Auflagefläche (Ringrippen) auf dem Rohr aufliegen. Dies erleichtert die Montage deutlich. Da die Klemmelemente sehr große Kräfte aufnehmen können, ohne daß sich die wirksame Auflagefläche verringern würde, läßt sich zudem eine hohe Sicherheit der Zugsicherung gewährleisten. Die Ringrippen liegen auf jeden Fall vollständig auf der Rohroberfläche auf, unabhängig auch von Toleranzen der Bauelemente.

Die Aufgabe wird dadurch vollkommen gelöst.

In einer bevorzugten Weiterbildung der Erfindung ist in jedem Flanschelement eine Bohrung zur Aufnahme einer Schraube vorgesehen und erstreckt sich das Flanschelement ausgehend von der Bohrung noch über eine Strecke von etwa 40 mm in axialer Richtung. Als besonders vorteilhaft hat sich eine axiale Länge des Vorsprungs von etwa 5 mm herausgestellt.

Der Vorteil dieser Ausgestaltung liegt darin, daß sie konstruktiv einfach aufgebaut und damit kostengünstig herstellbar ist, ohne Abstriche bei der Funktion hinnehmen zu müssen.

In einer bevorzugten Weiterbildung der Erfindung umfaßt jedes Klemmelement ein radial innen liegendes Ringrippen aufweisendes Klemmteil, wobei die Ringrippen ein sägezahnförmiges Profil besitzen und mit dem Spitzende zusammenwirken. Vorzugsweise ist das Klemmteil im Bereich der Auflagefläche aus einem harten Material gefertigt, so daß sich die Ringrippen in die Oberfläche des Spitzendes eingraben können. Um zu verhindern, daß das Klemmelement bei großer Belastung bricht, weist das Klemmelement einen zähen Kern auf. Besonders bevorzugt weisen die Klemmelemente eine konische äußere Oberfläche auf, die mit einer entsprechend ausgebildeten inneren Oberfläche des Randes zusammenwirken.

Diese Ausgestaltung hat den Vorteil, daß sich bei zunehmender Zugbelastung die Ringrippen der Klemmteile stärker in die Oberfläche eingraben, da die konische innere Oberfläche des Randes auf die konische äußere Oberfläche der Klemmelemente drückt.

Es ist weiterhin bevorzugt, die Flanschelemente der Klemmelemente aus den Ausnehmungen des Randes des Muffenendes herausragen zu lassen, so daß die Klemmelemente verspannbar sind. Dies hat den Vorteil, daß die Klemmschrauben leicht zugänglich sind und damit die Handhabung vereinfacht wird.

Die der Erfindung zugrunde liegende Aufgabe wird auch durch eine Klemmvorrichtung der eingangs genannten Art gelöst, die dadurch gekennzeichnet ist, daß jedes Flanschelement an einem dem Klemmelement abgewandten Ende einen sich in Umfangsrichtung erstreckenden Vorsprung aufweist, der mit einem Vorsprung des gegenüberliegenden Flanschelements des anderen Klemmelements zusammenwirkt.

Wie zuvor bereits erwähnt, liegt der Vorteil dieser Klemmvorrichtung darin, daß ein Verkippen der beiden Klemmelemente zueinander, d.h. aus einer Lage, in der die beiden Flanschelemente parallel zueinander verlaufen, verhindert wird. Es läßt sich somit die durch die Ringrippen verursachte Klemmwirkung verbessern, da die Kraft der Beaufschlagung gleichmäßiger erfolgt.

Bevorzugt ist in jedem Flanschelement eine Bohrung vorgesehen und erstreckt sich das Flanschelement ausgehend von der Bohrung noch über eine Strecke von etwa 40 mm in axialer Richtung, wobei der Vorsprung vorzugsweise eine axiale Länge von etwa 5 mm aufweist.

Eine solche Ausgestaltung der Klemmvorrichtung hat sich als besonders vorteilhaft, insbesondere unter dem Gesichtspunkt der Klemmwirkung und der Handhabung herausgestellt.

Weitere Vorteile und Ausgestaltungen der Erfindung ergeben sich aus der Beschreibung und der beiliegenden Zeichnung.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung wird nachfolgend anhand eines Ausführungsbeispiels mit Bezug auf die Zeichnung näher erläutert. Dabei zeigen:
- Fig. 1: eine perspektivische Ansicht einer Muffenverbindung in einem nicht zusammengesetzten Zustand;
- Fig. 2: eine schematische Darstellung der Muffenverbindung in verbundenem Zustand in einem Längsschnitt;
- Fig. 3: eine schematische Schnittdarstellung des in Fig. 1 gezeigten Klemmelements, von oben gesehen, und
- Fig. 4: eine schematische Darstellung des in Fig. 1 gezeigten Klemmelements, von der Seite gesehen, wobei der Übersichtlichkeit wegen nur eine der beiden Symmetriehälften dargestellt ist.

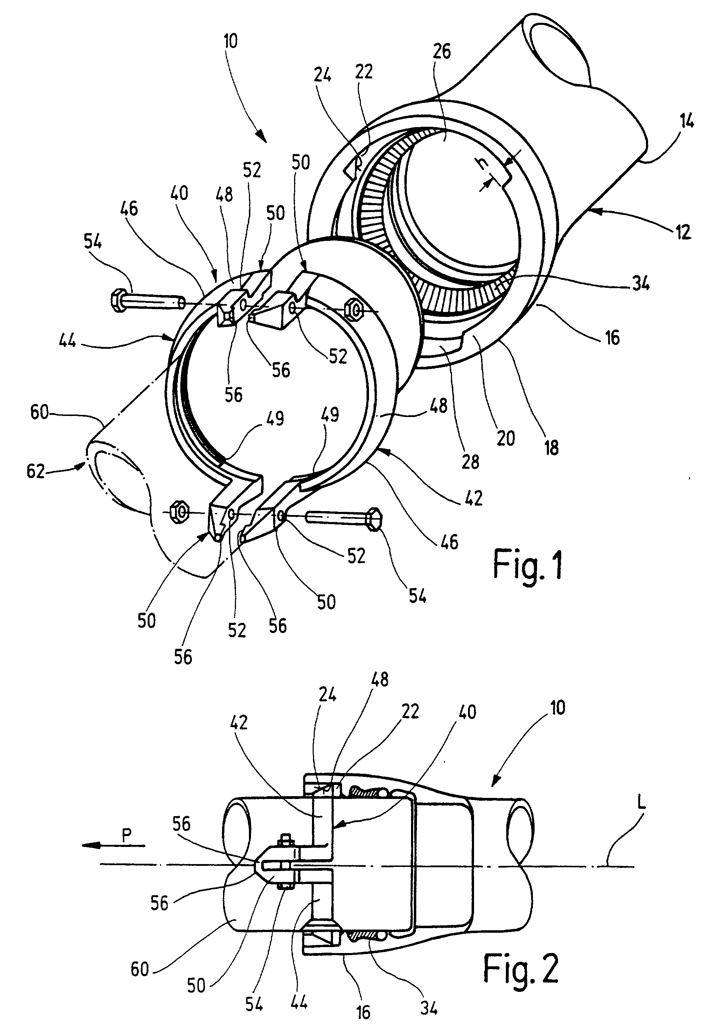

In Fig. 1 ist eine Muffenverbindung mit dem Bezugszeichen 10 gekennzeichnet. Diese Muffenverbindung 10 umfaßt ein Muffenstück 12, das entweder integraler Bestandteil eines Rohrs 14 oder mit einem solchen Rohr 14 verbindbar ist. Das Muffenstück 12 weist einen Längsabschnitt auf, der als Muffenende 16 bezeichnet wird und einen gegenüber dem Innendurchmesser des Rohrs 14 vergrößerten Innendurchmesser aufweist. Das Muffenende weist an seiner Stirnseite 18 einen flanschartigen Rand 20 auf, der sich in radialer Richtung um eine Länge h nach innen erstreckt.

Dieser Rand 20 ist an der Stirnseite 18 eben ausgebildet, während er an der Innenseite 22 konisch verläuft, so daß der Innendurchmesser des Randes 20 an der Stirnseite 18 kleiner ist als der Innendurchmesser des Randes 20 an der Innenseite 22. Es bildet sich somit eine bezüglich der Längsachse schräg verlaufende innere Ringfläche 24 aus.

Der Rand umfaßt in dem vorliegenden Ausführungsbeispiel zwei Ausnehmungen 26, 28, die sich über einen vorgegebenen Kreiswinkel erstrecken. Die radiale Erstreckung dieser Ausnehmungen entspricht h. Beide Ausnehmungen 26, 28 sind punktsymmetrisch zum Mittelpunkt des Muffenendes ausgebildet.

Die Fig. 1 läßt noch eine Ringdichtung 34 erkennen, die in einer nicht zu erkennenden Ringnut auf der Innenseite des Muffenendes 16 liegt und sich in radialer Richtung nach innen erstreckt. Diese Dichtung ist vorzugsweise aus EPDM (Äthylen-Prophylen-Terpolymerisat) hergestellt.

Zu der Muffenverbindung 10 gehört ferner eine Klemmvorrichtung 40, die zwei im vorliegenden Ausführungsbeispiel gleich ausgebildete Klemmelemente 42, 44 umfaßt. Die beiden Klemmelemente 42, 44 umfassen jeweils einen Grundkörper 46, der eine Ringsegmentform aufweist, wobei die beiden Grundkörper 46 zusammengelegt einen Kreis bilden. Das heißt, daß sich die beiden Grundkörper 46 jeweils über einen Winkelbereich von etwa 180° erstrecken. Im Querschnitt ist der Grundkörper 46 so ausgebildet, daß eine nach außen gewölbte äußere. Ringsegmentfläche 48 und eine gerade innere Ringsegmentfläche entsteht. Im vorliegenden Ausführungsbeispiel verjüngt sich die Ringsegmentfläche 48 zudem zum Betrachter hin, so daß die Dicke des Klemmelements an diesem Ende geringer ist als an dem gegenüberliegenden Ende.

An den Innenflächen der Grundkörper 46 sind Ringrippen 49 vorgesehen, wobei im vorliegenden Ausführungsbeispiel insgesamt drei in axialer Richtung hintereinander liegende Ringrippen verwendet werden.

An den Längsenden der Grundkörper 46 sind Flanschelement 50 angebracht. Die Flanschelemente 50 erstrecken sich in Fig. 1 in axialer Richtung nach vorne. In einem bezüglich der Fig. 1 vorderen Längsabschnitt der Flanschelemente 50 ist eine Bohrung 52 vorgesehen, die zur Aufnahme einer Klemmschraube 54 geeignet ist.

Die Flanschelemente 50 weisen an ihrem dem Grundkörper 46 abgewandten Ende Vorsprünge 56 auf, die sich weg von dem Grundkörper 46 in Umfangsrichtung erstrecken.

Fig. 1 läßt noch ein Spitzende 60 eines Rohrs 62 erkennen, das von den beiden Klemmelementen 42, 44 umgriffen wird.

Fig. 2 zeigt die Muffenverbindung 10 in zusammengesetztem Zustand. Dabei ist das Spitzende 60 in das Muffenende 16 eingeführt, wobei die Ringdichtung 34 an der Oberfläche des Spitzendes vollständig in Umfangsrichtung anliegt und die Dichtfunktion übernimmt.

Die beiden Klemmelemente 42, 44 liegen innerhalb des Muffenendes 16 und stützen sich mit ihrer Ringsegmentfläche 48 an der Ringfläche 24 des Muffenendes ab. Ferner liegen die Ringrippen 49 auf der Oberfläche des Spitzendes 60 auf. In diesem Zustand verlaufen die beiden Flanschelemente 50 parallel zu einer Längsachse L der Muffenverbindung. Die beiden Klemmelemente 42, 44 sind über die Klemmschrauben 54, wobei in Fig. 2 nur eine Klemmschraube zu sehen ist, so miteinander verbunden, daß ein verschiebungssicherer Halt der beiden Ringelemente 42, 44 auf dem Spitzende 60 gewährleistet ist.

In Fig. 2 ist deutlich zu erkennen, daß die Vorsprünge 56 zweier gegenüberliegender Flanschelemente 50 aufeinander aufliegen und somit Gegenlager bzw. Auflager für die Flanschelemente bilden. Sie verhindern damit ein Verkippen der Klemmelemente 42, 44 gegenüber der Längsachse. Ein solches Verkippen würde dazu führen, daß die Ringrippen 49 nicht mehr vollständig auf der Oberfläche des Spitzendes auflägen.

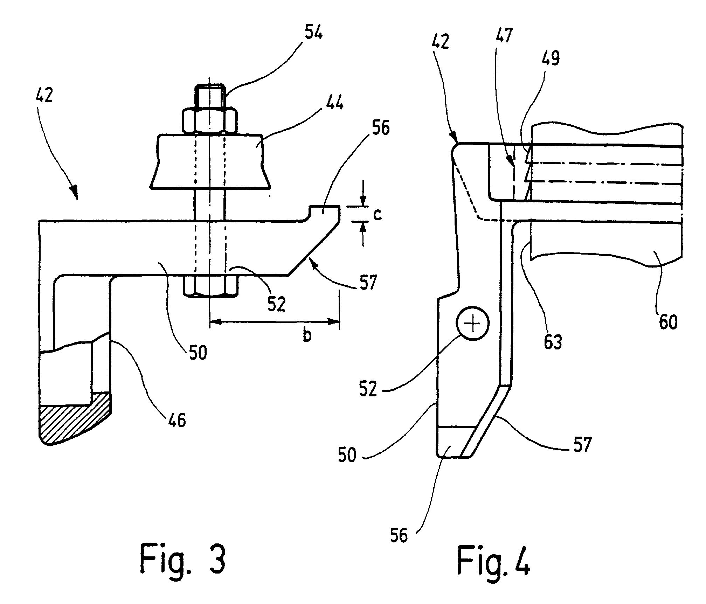

In Fig. 3 ist eines der beiden Klemmelemente 42, 44 nochmals vergrößert dargestellt. Deutlich zu erkennen ist das rechtwinklig vom Grundkörper 46 abgehende Flanschelement 50, das in einem mittleren Längsabschnitt die Bohrung 52 für die Klemmschraube 54 aufweist. Gegenüber der bisher bekannten konstruktiven Lösung erstreckt sich das Flanschelement noch über eine Strecke b, die etwa 40 mm beträgt. Bei den bisherigen Klemmelementen endete das Flanschelement unmittelbar nach der Bohrung.

Ein Längsendabschnitt 57 des Flanschelements 50 verjüngt sich und trägt den Vorsprung 56, der auf der dem gegenüberliegenden Element 44 zugewandten Seite hervorspringt. Der Vorsprung 56 hat eine Länge in Umfangsrichtung, die mit c bezeichnet ist und vorzugsweise 5 mm beträgt.

In Fig. 4 ist das Klemmelement 42 nochmals in einer anderen Perspektive, nämlich in einer Seitenansicht (bezüglich der Darstellung in Fig. 1) gezeigt. In dieser Darstellung sind insbesondere die im vorliegenden Ausführungsbeispiel drei Ringrippen 49 zu erkennen, die ein sägezahnförmiges Profil aufweisen. üblicherweise sind diese Ringrippen 49 Teil eines Klemmteils 47, das an der Innenseite der Klemmelemente angebracht ist. Es wird vorzugsweise aus einem anderen, nämlich härteren Material als das Klemmelement gefertigt. Die Ringrippen 49 graben sich, wie bereits erwähnt, in die schematisch dargestellte Oberfläche 63 des Spitzendes 60 ein.

Die Verbindung der beiden Rohre 14 und 62 mit Hilfe der Muffenverbindung 10 wird nun wie folgt durchgeführt:

Die beiden Klemmelemente 42, 44 werden zunächst getrennt voneinander in das Muffenende 16 eingelegt und dort so zueinander ausgerichtet, daß die Bohrungen 52 von einander gegenüberliegenden Flanschelementen 50 fluchten. Durch jeweils fluchtende Bohrungen wird dann eine Klemmschraube 54 eingeschoben und durch eine Mutter gesichert. Die beiden Klemmelemente 42, 44 sind damit lose fixiert, wobei der Abstand zwischen den Flanschelementen noch variierbar ist. Die Ringsegmentflächen 48 der beiden Klemmelemente 42, 44 liegen nun an der Ringfläche 24 an bzw. liegen dahinter.

Anschließend wird das mit einem Gleitmittel versehene Spitzende 60 in das Muffenende 16 so weit eingesteckt, bis es am Muffengrund anschlägt. Beim Einstecken des Spitzendes sollte darauf geachtet werden, daß dessen Längsachse parallel zur Längsachse des Muffenendes verläuft, d.h. mit anderen Worten, das Spitzende gegenüber dem Muffenende nicht verkippt ist. Bereits beim Einstecken des Spitzendes 60 sorgen die sich gegenüberliegenden Vorsprünge 56 der Flanschelemente 50 dafür, daß die Klemmelemente 42, 44 gar nicht bzw. nur minimal verkippen.

Nachdem das Spitzende eingesteckt ist, werden die Klemmschrauben 54 festgezogen, wobei die Flanschelemente 50 durch die Ausnehmungen 26, 28 des Rands 20 hindurchragen und somit leicht zugänglich sind. Beim Festschrauben der Klemmschrauben 54 sorgen die aufeinander liegenden Vorsprünge 56 dafür, daß die Flanschelemente 50 nicht verbiegen und statt dessen die Grundkörper 46 der beiden Klemmelemente 42, 44 fest an die Oberfläche des Spitzendes 60 angedrückt werden.

Wie sich aus Fig. 2 deutlich ergibt, wird die Zugsicherung durch die Klemmvorrichtung 40 erzielt, wobei die innen liegende Ringfläche 24 des Rands 20 als Anschlag für die Klemmelemente 42, 44 dient. Durch die konische Ausgestaltung dieser Ringfläche 24 und der Ringsegmentflächen 48 wird der in radialer Richtung wirkende Druck auf die Ringrippen mit Erhöhung des auf das Spitzende wirkenden Zugs in Richtung P erhöht, was zu einer Verbesserung der Klemmwirkung führt.

Es zeigt sich also, daß durch eine sehr einfache konstruktive Lösung, nämlich das Vorsehen von als Auflager dienenden Vorsprüngen an den Flanschelementen eine deutliche Verbesserung der Klemmwirkung erzielt wird, da beim Anziehen der Klemmschrauben die Kraft optimal auf den Grundkörper 46 der Klemmelemente 42, 44 übertragen wird.

## Patentansprüche

1. Muffenverbindung zur Verbindung zweier Rohre, Rohrformstücke oder dgl., mit
einem dem einen Rohr (14) zugeordneten Muffenende (16), in das ein Spitzende (60) des anderen Rohrs (62) einführbar ist und das einen radial nach innen ragenden Rand (20) mit zumindest zwei ringsegmentförmigen Ausnehmungen (26, 28) aufweist, und
einer Klemmvorrichtung (40) zum Halten des Spitzendes (60) in dem Muffenende (16), indem die Klemmvorrichtung (40) mit dem Spitzende (60) verbunden wird und sich die Klemmvorrichtung (40) an dem Rand (20) abstützt, wobei die Klemmvorrichtung (40) zwei ringsegmentförmige Klemmelemente (42, 44) aufweist, die an ihren Längsenden jeweils ein sich axial erstreckendes Flanschelement (50) umfassen,
**dadurch gekennzeichnet, daß**
jedes Flanschelement (50) an seinem dem Klemmelement (44; 42) abgewandten Ende einen sich in Umfangsrichtung erstreckenden Vorsprung (56) aufweist, der mit einem gegenüberliegenden Vorsprung (56) des anderen Klemmelements (42; 44) zusammenwirkt.

2. Muffenverbindung nach Anspruch 1, **dadurch gekennzeichnet, daß** in jedem Flanschelement (50) eine Bohrung (52) zur Aufnahme einer Schraube vorgesehen ist, und daß sich das Flanschelement (50) ausgehend von der Bohrung (52) noch über eine Strecke (b) von etwa 40mm in axialer Richtung erstreckt.

3. Muffenverbindung nach Anspruch 1 oder 2, **dadurch gekennzeichnet, daß** der Vorsprung (56) eine axiale Länge (c) von etwa 5mm aufweist.

4. Muffenverbindung nach Anspruch 1, 2 oder 3, **dadurch gekennzeichnet, daß** jedes Klemmelement (42, 44) ein radial innen liegendes Ringrippen (49) aufweisendes Klemmteil (47) umfaßt, wobei die Ringrippen (49) ein sägezahnförmiges Profil besitzen und mit dem Spitzende (60) zusammenwirken.

5. Muffenverbindung nach Anspruch 4, **dadurch gekennzeichnet, daß** das Klemmteil (47) aus einem harten Material gefertigt ist, so daß sich die Ringrippen (49) in die Oberfläche (63) des Spitzendes (60) eingraben können.

6. Muffenverbindung nach einem der vorhergehenden Ansprüche, **dadurch gekennzeichnet, daß** die Klemmelemente (42, 44) eine konische äußere Oberfläche (48) aufweisen, die mit einer entsprechend ausgebildeten inneren Oberfläche (24) des Randes (20) zusammenwirken.

7. Muffenverbindung nach einem der vorhergehenden Ansprüche, **dadurch gekennzeichnet, daß** die Flanschelemente (50) der Klemmelemente (42, 44) aus den Ausnehmungen (26, 28) des Randes (20) des Muffenendes (16) herausragen.

8. Klemmvorrichtung für eine zwei Rohre verbindende Muffenverbindung (10), wobei die Klemmvorrichtung (40) an einem Rohr (62) festgeklemmt wird und sich diese an einem radial nach innen ragenden Rand (20) eines Muffenendes (16) abstützt, um die Zugsicherung zu erzielen, mit zwei ringsegmentförmigen Klemmelementen (42, 44), die an ihren Längsenden jeweils ein sich in axialer Richtung erstreckendes Flanschelement (50) umfassen, **dadurch gekennzeichnet, daß** jedes Flanschelement (50) an einem dem Klemmelement (42; 44) abgewandten Ende einen sich in Umfangsrichtung erstreckenden Vorsprung (56) aufweist, der mit einem Vorsprung (56) des gegenüberliegenden Flanschelements (50) des anderen Klemmelements (44; 42) zusammenwirkt.

9. Klemmvorrichtung nach Anspruch 8, **dadurch gekennzeichnet, daß** in jedem Flanschelement (50) eine Bohrung (52) vorgesehen ist, und daß sich das Flanschelement (50) ausgehend von der Bohrung (52) noch über eine Strecke (b) von etwa 40mm in axialer Richtung (L) erstreckt.

10. Klemmvorrichtung nach Anspruch 8 oder 9, **dadurch gekennzeichnet, daß** der Vorsprung (56) eine Länge in Umfangsrichtung (c) von etwa 5mm aufweist.

## Claims

1. Coupling sleeve for coupling two pipes, pipe fittings or the like, comprising
a sleeve end (16) associated to the one pipe (14), in which a tapered end (60) of the other pipe (62) is insertable and which comprises a radial inwardly projecting edge (20) with at least two ring segment-shaped recesses (26, 28), and
a clamping device (40) for holding the tapered end (60) in the sleeve end (16) by coupling the clamping device (40) with the tapered end (60) and by supporting the clamping device (40) on the edge (20), the clamping device (40) comprising two ringsegment-shaped clamping members (42, 44), each comprising at its longitudinal end an axially extending flange member (50),
**characterized in that**
each flange member (50) comprises at its end opposite to the clamping member (44; 42) a projection (56) extending in a circumferential direction, the projection cooperating with an opposing projection (56) of the other clamping member (42; 44).

2. Coupling sleeve according to claim 1, **characterized in that** each flange member (50) is provided with a bore (52) for receiving a screw, and that the flange member (50) extends in an axial direction along a distance (b) of about 40 mm starting from the bore (52).

3. Coupling sleeve according to claim 1 or 2, **characterized in that** the projection (56) has an axial length (c) of about 5 mm.

4. Coupling sleeve according to claim 1, 2 or 3, **characterized in that** each clamping member (42, 44) comprises a radial inwardly positioned clamping part (47) with gills (49), the gills (49) having a sawtooth-shaped profile and cooperating with the tapered end (60).

5. Coupling sleeve according to claim 4, **characterized in that** the clamping part (47) is made of a hard material, so that the gills (49) may dig in the surface (63) of the tapered end (60).

6. Coupling sleeve according to any of the preceding claims, **characterized in that** the clamping members (42, 44) comprise an outer conical surface (48), which cooperates with a respectively formed inner surface (24) of the edge (20).

7. Coupling sleeve according to one of the preceding claims, **characterized in that** the flange members (50) of the clamping parts (42, 44) project out of the recesses (26, 28) of the edge (20) of the sleeve end (16).

8. Clamping device for a coupling sleeve (10) coupling two pipes, wherein the clamping device (40) is clamped at a pipe (62) and the clamping device is supported by a radial inwardly projecting edge (20) of a sleeve end (16) to achieve a pull protection, the clamping device comprising two ringsegment-shaped clamping members (42, 44), having at its longitudinal ends respective flange members (50) extending in an axial direction, **characterized in that** each flange member (50) comprises a projection (56) at one end opposite to the clamping member (42; 44) and extending in a circumferential direction, the projection cooperating with a projection (56) of the opposite flange member (50) of the other clamping member (44; 42).

9. Clamping device according to claim 8, **characterized in that** each flange member (50) is provided with a bore (52), and that the flange element (50) extends along a distance (b) of about 40 mm in an axial direction (L) starting from the bore (52).

10. Clamping device according to claim 8 or 9, **characterized in that** the projection (56) has a length of about 5 mm in the circumferential direction (c).

## Revendications

1. Raccord par manchon pour le raccordement de deux tuyaux, pièces d'assemblage pour tuyaux ou éléments semblables, avec un des bouts femelles (16) affecté à un des tuyaux (14), un bout mâle (60) de l'autre tuyau (62) pouvant être introduit dans ledit bout femelle qui présente un collet (20) entrant radialement vers l'intérieur avec au moins deux creux en forme d'anneau (26, 28), et
un dispositif de serrage (40) destiné à maintenir le bout mâle (60) dans le bout femelle (16), dans lequel le dispositif de serrage (40) est relié au bout mâle (60) et le dispositif de serrage (40) s'appuie sur le collet (20), le dispositif de serrage (40) présentant deux éléments de serrage en forme de tronçon d'anneau (42, 44), qui comportent chacun à leur extrémité longitudinale un élément de bride (50) s'étendant axialement,
**caractérisé en ce que**
chaque élément de bride (50) présente au niveau de son extrémité opposée à l'élément de serrage (44 ; 42), une portée (56) s'étendant dans le sens périphérique, ladite portée coopérant avec une portée (56) opposée de l'autre élément de serrage (42 ; 44).

2. Raccord par manchon selon la revendication 1, **caractérisé en ce qu'**un alésage (52) destiné à recevoir une vis est prévu dans chaque élément de bride (50), et **en ce que** l'élément de bride (50) partant de l'alésage (52) s'étend encore sur une distance (b) d'environ 40 mm dans le sens axial.

3. Raccord par manchon selon l'une des revendications 1 et 2, **caractérisé en ce que** la portée (56) présente une longueur axiale (c) d'environ 5 mm.

4. Raccord par manchon selon l'une des revendications 1, 2 et 3, **caractérisé en ce que** chaque élément de serrage (42, 44) comprend une pièce de serrage (47) présentant des nervures annulaires (49) se trouvant radialement à l'intérieur, les nervures annulaires (49) disposant d'un profil en dents de scie et coopérant avec le bout mâle (60).

5. Raccord par manchon selon la revendication 4, **caractérisé en ce que** la pièce de serrage (47) est fabriquée en un matériau dur, de manière à ce que les nervures annulaires (49) puissent se graver dans la surface (63) du bout mâle (60).

6. Raccord par manchon selon l'une des revendications précédentes, **caractérisé en ce que** les éléments de serrage (42, 44) présentent une surface extérieure conique (48) qui coopère avec une surface intérieure (24) du collet (20) formée en conséquence.

7. Raccord par manchon selon l'une des revendications précédentes, **caractérisé en ce que** les éléments de bride (50) des éléments de serrage (42, 44) dépassent des creux (26, 28) du collet (20) du bout femelle (16).

8. Dispositif de serrage pour un raccord par manchon (10) reliant deux tuyaux, le dispositif de serrage (40) étant bloqué sur un tuyau (62) et ce dernier s'appuyant sur un collet (20) d'un bout femelle (16) se dressant radialement vers l'intérieur afin d'atteindre la sécurisation de traction, avec deux éléments de serrage (42, 44) en forme d'anneau qui comprennent à leurs extrémités longitudinales chacun un élément de bride (50) s'étendant dans le sens axial, **caractérisé en ce que** chaque élément de bride (50) présente au niveau de son extrémité opposée à l'élément de serrage (42 ; 44), une portée (56) s'étendant dans le sens périphérique, ladite portée coopérant avec une portée (56) de l'élément de bride opposé de l'autre élément de serrage (44 ; 42).

9. Dispositif de serrage selon la revendication 8, **caractérisé en ce qu'**un alésage (52) destiné à recevoir une vis est prévu dans chaque élément de bride (50), et **en ce que** l'élément de bride (50) partant de l'alésage (52) s'étend encore sur une distance (b) d'environ 40 mm dans le sens axial (L).

10. Dispositif de serrage selon l'une des revendications 8 et 9, **caractérisé en ce que** la portée (56) présente une longueur d'environ 5 mm dans le sens périphérique (c).
